(19) Europäisches Patentamt / European Patent Office / Office européen des brevets

(11) **EP 4 651 493 A1**

(12) **EUROPEAN PATENT APPLICATION**
published in accordance with Art. 153(4) EPC

(43) Date of publication:
**19.11.2025 Bulletin 2025/47**

(21) Application number: **24741140.8**

(22) Date of filing: **04.01.2024**

(51) International Patent Classification (IPC):
*H04N 19/597* (2014.01)    *G06T 9/00* (2006.01)

(52) Cooperative Patent Classification (CPC):
**G06T 9/00; H04N 19/50; H04N 19/597; H04N 19/91**

(86) International application number:
**PCT/CN2024/070511**

(87) International publication number:
**WO 2024/149141 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.01.2023  CN 202310041950**

(71) Applicant: Vivo Mobile Communication Co., Ltd.
**Dongguan, Guangdong 523863 (CN)**

(72) Inventors:
• ZHANG, Wei
  Dongguan, Guangdong 523863 (CN)
• ZHANG, Ke
  Dongguan, Guangdong 523863 (CN)
• YANG, Fuzheng
  Dongguan, Guangdong 523863 (CN)
• LV, Zhuoyi
  Dongguan, Guangdong 523863 (CN)

(74) Representative: Shieldmark
**P.O. Box 90471
2509 LL The Hague (NL)**

(54) **POINT CLOUD ENCODING METHOD AND APPARATUS, POINT CLOUD DECODING METHOD AND APPARATUS, AND COMMUNICATION DEVICE**

(57)    This application pertains to the field of computer technologies, and discloses a point cloud encoding method and apparatus, a point cloud decoding method and apparatus, and a communication device. The point cloud encoding method in embodiments of this application includes: performing coordinate transformation processing on geometric information of a point cloud to obtain geometric information having a chain structure; determining a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure; and predictively encoding a radial distance of the to-be-encoded point based on the first target prediction point, to obtain a radial distance encoding result.

```
          ┌─────────┐
          │  Start  │
          └────┬────┘
               │
┌──────────────▼───────────────────────┐
│ Perform coordinate transformation     │
│ processing on geometric information    │──── 101
│ of a point cloud to obtain geometric   │
│ information having a chain structure   │
└──────────────┬───────────────────────┘
               │
┌──────────────▼───────────────────────┐
│ Determine a first target prediction    │
│ point that matches a to-be-            │──── 102
│ encoded point in the chain structure   │
└──────────────┬───────────────────────┘
               │
┌──────────────▼───────────────────────┐
│ Predictively encode a radial distance  │
│ of the to-be-encoded point             │
│ based on the first target prediction   │──── 103
│ point, to obtain a radial              │
│ distance encoding result               │
└──────────────┬───────────────────────┘
               │
          ┌────▼────┐
          │   End   │
          └─────────┘
```

FIG. 3

## Description

## CROSS-REFERENCE TO RELATED APPLICATIONS

This application claims priority to Chinese Patent Application No. 202310041950.8, filed in China on January 11, 2023, which is incorporated herein by reference in its entirety.

## TECHNICAL FIELD

This application pertains to the field of computer technologies, and specifically relates to a point cloud encoding method and apparatus, a point cloud decoding method and apparatus, and a communication device.

## BACKGROUND

A point cloud is a representation of a three-dimensional object or scene. The point cloud includes a set of discrete points that are irregularly distributed in space and that describe a spatial structure and surface properties of the three-dimensional object or scene. To accurately reflect information in space, a large quantity of discrete points are required. However, to reduce a bandwidth occupied during storage and transmission of point cloud data, it is necessary to encode and compress the point cloud data. Point cloud data usually includes geometric information describing a position, such as three-dimensional coordinates (x, y, z), and attribute information of the position, such as color (R, G, B) or reflectivity. During point cloud encoding and compression, the geometric information and the attribute information are encoded and compressed separately.

In the related art, in a process of encoding geometric information based on a chain structure, for radial distance information of a point cloud, a radial distance of an encoded point located in a same row as a to-be-encoded point is used as a predicted value for predictive encoding, and there is no clear difference between predicted values. This has great impact on updating of a context model and distribution of radial distance prediction residuals in an entropy encoding process, resulting in a large bitstream and low encoding efficiency.

## SUMMARY

Embodiments of this application provide a point cloud encoding method and apparatus, a point cloud decoding method and apparatus, and a communication device to resolve a problem that encoding efficiency is low.

According to a first aspect, a point cloud encoding method is provided and includes:

performing coordinate transformation processing on geometric information of a point cloud to obtain geometric information having a chain structure;

determining a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure; and

predictively encoding a radial distance of the to-be-encoded point based on the first target prediction point, to obtain a radial distance encoding result.

According to a second aspect, a point cloud decoding method is provided and includes:

determining a second target prediction point that matches a to-be-decoded point in a chain structure, where the second target prediction point is a point selected from second target occupied points in the chain structure, the second target occupied points include occupied points in a decoded row, and the second target occupied points and the to-be-decoded point are located in different rows in the chain structure; and

reconstructing a radial distance of the to-be-decoded point based on the second target prediction point, to obtain a radial distance reconstruction result.

According to a third aspect, a point cloud encoding apparatus is provided and includes:

an obtaining module, configured to perform coordinate transformation processing on geometric information of a point cloud to obtain geometric information having a chain structure;

a determining module, configured to determine a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure; and

an encoding module, configured to predictively encode a radial distance of the to-be-encoded point based on the first target prediction point, to obtain a radial distance encoding result.

According to a fourth aspect, a point cloud decoding apparatus is provided and includes:

a determining module, configured to determine a second target prediction point that matches a to-be-decoded point in a chain structure, where the second target prediction point is a point selected from second target occupied points in the chain structure, the second target occupied points include occupied points in a decoded row, and the second target occupied points and the to-be-decoded point are located in different rows in the chain structure; and

a processing module, configured to reconstruct a radial distance of the to-be-decoded point based on the second target prediction point, to obtain a radial distance reconstruction result.

According to a fifth aspect, a communication device is provided. The communication device includes a processor, a memory, and a program or instructions stored in the memory and capable of running on the processor. When the program or instructions are executed by the processor, the steps of the method according to the first aspect are implemented, or when the program or instructions are executed by the processor, the steps of the method according to the second aspect are implemented.

According to a sixth aspect, a communication device is provided and includes a processor and a communication interface. The processor is configured to: perform coordinate transformation processing on geometric information of a point cloud to obtain geometric information having a chain structure; determine a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure; and predictively encode a radial distance of the to-be-encoded point based on the first target prediction point, to obtain a radial distance encoding result.

According to a seventh aspect, a communication device is provided and includes a processor and a communication interface. The processor is configured to: determine a second target prediction point that matches a to-be-decoded point in a chain structure, where the second target prediction point is a point selected from second target occupied points in the chain structure, the second target occupied points include occupied points in a decoded row, and the second target occupied points and the to-be-decoded point are located in different rows in the chain structure; and reconstruct a radial distance of the to-be-decoded point based on the second target prediction point, to obtain a radial distance reconstruction result.

According to an eighth aspect, a readable storage medium is provided. The readable storage medium stores a program or instructions. When the program or instructions are executed by a processor, the steps of the method according to the first aspect are implemented, or when the program or instructions are executed by a processor, the steps of the method according to the second aspect are implemented.

According to a ninth aspect, a chip is provided. The chip includes a processor and a communication interface. The communication interface is coupled to the processor. The processor is configured to run a program or instructions to implement the steps of the method according to the first aspect or implement the steps of the method according to the second aspect.

According to a tenth aspect, a computer program or program product is provided. The computer program or program product is stored in a non-volatile storage medium. The program or program product is executed by at least one processor to implement the steps of the method according to the first aspect or implement the steps of the method according to the second aspect.

In the embodiments of this application, coordinate transformation processing is performed on the geometric information of the point cloud to obtain the geometric information having the chain structure; the first target prediction point that matches the to-be-encoded point in the chain structure is determined, where the first target prediction point is the point selected from the first target occupied points in the chain structure, the first target occupied points include the occupied points in the encoded row, and the first target occupied points and the to-be-encoded point are located in different rows in the chain structure; and the radial distance of the to-be-encoded point is predictively encoded based on the first target prediction point, to obtain the radial distance encoding result. In this way, predictive encoding based on the first target prediction point can fully use information of the occupied points in the encoded row, thereby improving radial distance prediction performance, reducing a radial distance bitstream, and improving encoding efficiency.

**BRIEF DESCRIPTION OF DRAWINGS**

FIG. 1 is a schematic diagram of a chain structure;
FIG. 2a is a schematic diagram of a TML encoder framework;
FIG. 2b is a schematic diagram of a TML decoder framework;
FIG. 3 is a schematic flowchart of a point cloud encoding method according to an embodiment of this application;
FIG. 4 is a schematic diagram of a process of selecting a horizontal predicted value of a radial distance and updating a list according to an embodiment of this application;
FIG. 5 is a schematic diagram of a process of selecting a vertical predicted value of a radial distance according to an embodiment of this application;
FIG. 6 is a schematic diagram of a position of a to-be-encoded point according to an embodiment of this application;

FIG. 7 is a schematic flowchart of a point cloud decoding method according to an embodiment of this application;

FIG. 8 is a schematic diagram for selecting a predicted value of a to-be-encoded point according to an embodiment of this application;

FIG. 9 is a schematic structural diagram of a point cloud encoding apparatus according to an embodiment of this application;

FIG. 10 is a schematic structural diagram of a point cloud decoding apparatus according to an embodiment of this application;

FIG. 11 is a structural diagram of a communication device according to an embodiment of this application; and

FIG. 12 is a structural diagram of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

An encoder/decoder corresponding to an encoding/decoding method in the embodiments of this application may be a terminal. The terminal may also be referred to as a terminal device or a user terminal (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), or pedestrian user equipment (Pedestrian User Equipment, PUE). The wearable device includes a smart watch, a smart band, an earphone, glasses, or the like. It should be noted that a specific type of the terminal is not limited in the embodiments of this application.

For ease of understanding, the following describes some content in the embodiments of this application.

Geometry-based point cloud compression (Geometry-based Point Cloud Compression, G-PCC) test model for LiDAR (Test Model for LiDAR, TML) encoder framework

In the G-PCC TML encoder framework, a geometric information encoding method based on a chain structure is used. Geometric encoding based on the chain structure includes the following steps:

First, packetization processing is performed on a point cloud, and a virtual head node is added to each packet. This packetization step is primarily intended to take impact of downsampling on a ground point cloud into account. Then the point cloud is reordered based on an azimuth and a laser beam index, and then downsampled. Herein, downsampling involves discarding points without compromising accuracy.

Next, the chain structure is established, coordinate transformation is performed on geometric information to transform the point cloud from a Cartesian coordinate system to a cylindrical coordinate system, and each point in the point cloud is mapped to a corresponding position in the chain structure. Then position information, duplicate point information, radial distances, azimuth errors, prediction indexes, and coordinate transformation errors of points are encoded based on an order of position indexes of the points in the chain structure to generate a binary bitstream. In a process of geometric decoding based on the chain structure, a decoder performs decoding based on the order of the position indexes to sequentially obtain geometric information of each part of points, reconstructs the entire chain structure, and finally recovers a geometrically reconstructed point cloud.

It should be noted that the TML may be described as a test model for a rotary LiDAR point cloud, and may also be described as a low latency low complexity codec (Low Latency Low Complexity Codec, L3C2).

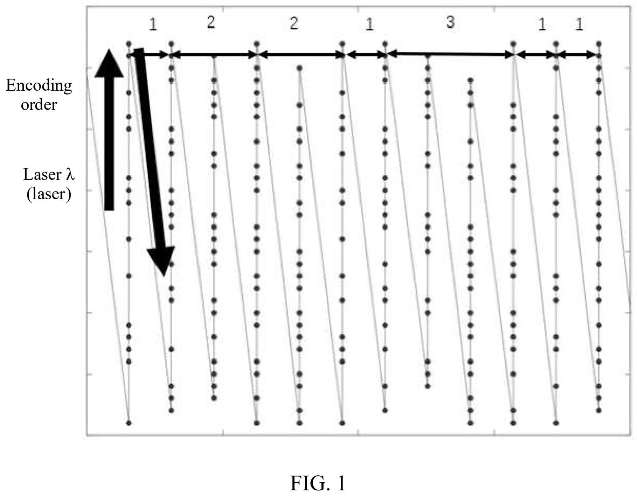

In addition, the chain structure may be a one-chain structure. The chain structure may be a one-chain (one-chain) geometric structure in a rotary LiDAR point cloud compression standard TML, such as a one-chain structure shown in FIG. 1, where an arrow shows an encoding order, a horizontal axis is an index of a column in which each point is located (a quantized and rounded result of a horizontal azimuth of a current point), and a vertical axis is an index of a row in which each point is located (corresponding to an identity (Identity, ID) of a LiDAR scanning beam). Each occupied point in the one-chain structure is a real point in space. A chaining method for the one-chain structure is: transforming coordinates of each point from the Cartesian coordinate system to the cylindrical coordinate system to obtain coordinate values $(r, \varphi, \lambda)$, then obtaining a quantized column index $\varphi_c$ of each point, and calculating an order index of each point: $orderIndex = \varphi_c * N_{laser} + \lambda$, where $N_{laser}$ is a quantity of LiDAR scanning beams per row in the one-chain structure, and $\varphi_c = round(\varphi/\Delta\varphi)$. The order index obtained through calculation is a specific position of the current point in the one-chain structure.

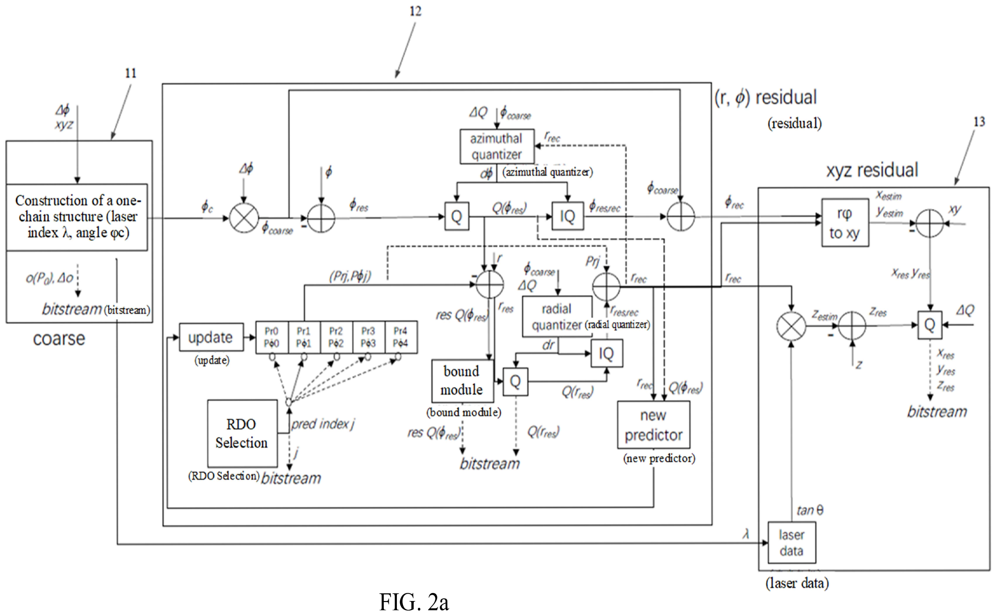

As shown in a TML encoder framework in FIG. 2a, a block 11 represents a process of constructing a chain structure based on LiDAR prior information (including an angular velocity $\Delta\varphi$, a laser beam index $\lambda$, and the like) and geometric information (xyz coordinates) of a point cloud. A block 12 is a process of performing predictive encoding on geometric information of each point, including a radial distance and a horizontal azimuth, and a process of updating a prediction list. A block 13 is a process of encoding a coordinate transformation error of each point. Because a final point cloud to be recovered is a point cloud in the Cartesian coordinate system, but when geometric coordinates of points are transformed from the Cartesian coordinate system to the cylindrical coordinate system and then transformed from the cylindrical coordinate system back to the Cartesian coordinate system, coordinate transformation errors may occur, to achieve lossless encoding and decoding of the point cloud, it is necessary to encode and decode the coordinate transformation errors. Construction of a one-chain structure (laser index $\lambda$, angle $\varphi c$) may be expressed as: construction of one chain structure (laser index $\lambda$, angle $\varphi c$).

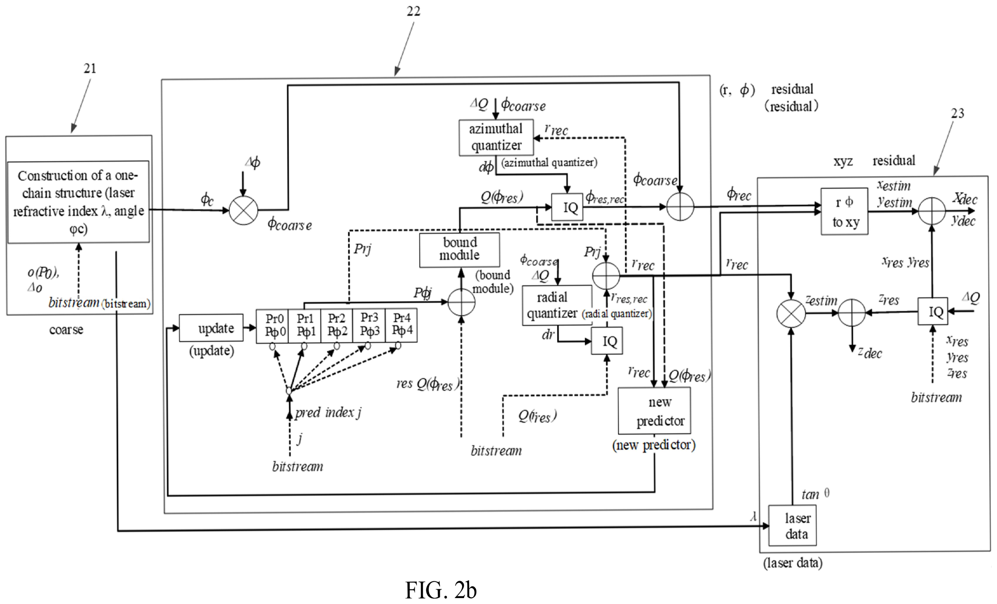

As shown in a TML decoder framework in FIG. 2b, a block 21 represents a process of constructing a chain structure based on LiDAR prior information (including an angular velocity $\Delta\varphi$, a laser beam index $\lambda$, and the like) and reconstructed geometric information (xyz coordinates) of a point cloud. A block 22 is a process of performing predictive decoding on geometric information of each point, including a radial distance and a horizontal azimuth, and a process of updating a prediction list. A block 23 is a process of decoding a coordinate transformation error of each point.

A point cloud encoding method and a point cloud decoding method provided in the embodiments of this application are hereinafter described in detail by using some embodiments and application scenarios thereof with reference to the accompanying drawings.

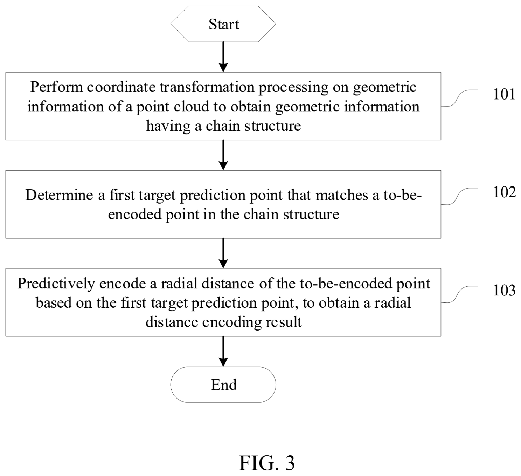

FIG. 3 is a flowchart of a point cloud encoding method according to an embodiment of this application. The point cloud encoding method may be applied to an encoding device. As shown in FIG. 3, the point cloud encoding method includes the following steps.

Step 101: Perform coordinate transformation processing on geometric information of a point cloud to obtain geometric information having a chain structure.

The chain structure may be established, coordinate transformation is performed on the geometric information of the point cloud to transform the point cloud from a Cartesian coordinate system to a cylindrical coordinate system, and each point in the point cloud is mapped to a corresponding position in the chain structure. In this way, the geometric information having the chain structure is obtained. A first target occupied point may be an encoded occupied point located in a different row from a to-be-encoded point in the chain structure. A first target prediction point may be a point selected from occupied points in other encoded rows. The other rows represent rows different from a row in which the to-be-encoded point is located. An occupied point indicates that the point is not empty and contains point cloud data. An unoccupied point indicates that the point is empty and does not contain point cloud data.

Step 102: Determine a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure.

In an implementation, a selection rule for selecting the first target prediction point from the first target occupied points in the chain structure may be: selecting the first target prediction point from the first target occupied points in the chain structure based on at least one of a horizontal distance and a vertical distance, where the horizontal distance is a horizontal distance between the first target occupied point and the to-be-encoded point in the chain structure; and the vertical distance is a vertical distance between the first target occupied point and the to-be-encoded point in the chain structure.

It should be noted that for the first target occupied points in the chain structure, the first target prediction point matching the to-be-encoded point may be determined from the first target occupied points according to a bottom-up search rule, a top-down search rule, or another search rule, starting from the current the to-be-encoded point.

Step 103: Predictively encode a radial distance of the to-be-encoded point based on the first target prediction point, to obtain a radial distance encoding result.

The predictively encoding a radial distance of the to-be-encoded point based on the first target prediction point may include: updating, based on a radial distance of the first target prediction point, a prediction list corresponding to the radial distance of the to-be-encoded point, selecting an optimal predicted value from an updated prediction list, and obtaining a prediction residual and prediction information based on the optimal predicted value, where the radial distance encoding result includes the prediction residual and the prediction information; or a prediction index may be a preset value or a value specified in a protocol, and the predictively encoding a radial distance of the to-be-encoded point based on the first target prediction point may include: updating, based on a radial distance of the first target prediction point, a prediction list corresponding to the radial distance of the to-be-encoded point, selecting an optimal predicted value from an updated prediction list, and obtaining a prediction residual based on the optimal predicted value, where the radial distance encoding result includes the prediction residual; or the predictively encoding a radial distance of the to-be-encoded point based on the first target prediction point may include: using a radial distance of the first target prediction point as a predicted value of the radial distance of the to-be-encoded point, and obtaining a prediction residual based on the predicted value, where the radial distance encoding result includes the prediction residual; or the like. A specific implementation of predictively encoding the radial distance of the to-be-encoded point based on the first target prediction point is not limited in this embodiment.

In the related art, in a geometric encoding process based on a chain structure, for radial distance information of a point cloud, a rate-distortion optimization method is used to select an optimal predicted value from a prediction list, obtain a prediction residual by predicting the radial distance information of the point cloud, and encode the prediction residual and a prediction index. The prediction list is updated dynamically every time radial distance information of a point is encoded. Prediction of radial distance information is divided into two parts. The first part is horizontal prediction, and the second part is vertical prediction. During selection of a predicted value, first, an optimal horizontal candidate predicted value is selected from a horizontal prediction list, and then comparison is made between the optimal horizontal candidate predicted value and a vertical predicted value to select a final optimal predicted value.

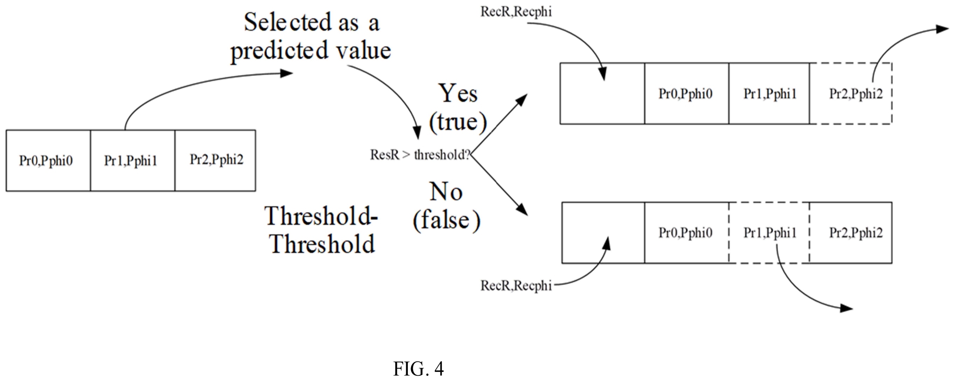

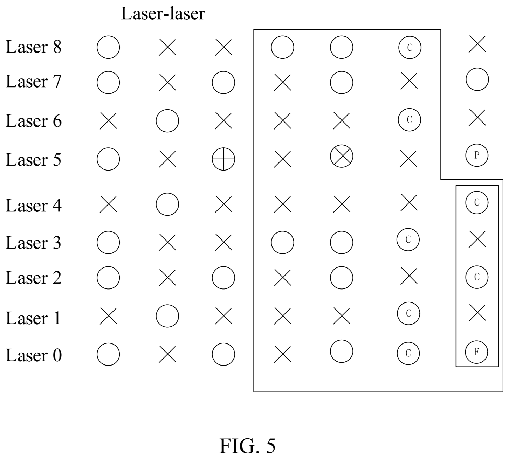

As shown in FIG. 4, a rule for updating the horizontal prediction list is: determining whether a prediction residual (ResR) of a radial distance of a previous occupied point is greater than a preset threshold (threshold) (or whether a previous occupied point is predicted by using a vertical predicted value); and if the prediction residual is greater than the threshold (threshold) (or if the vertical predicted value is selected for prediction), removing a last value from the horizontal prediction list, and adding a reconstructed value of a previous occupied encoded point to a first position in the prediction list; otherwise, removing a selected predicted value from the prediction list, and adding a reconstructed value of a previous occupied encoded point to a first position in the prediction list. In FIG. 4, Pr0, Pr1, and Pr2 are predicted values of a radial distance, Pphi0, Pphi1, and Pphi2 are predicted values of an angle, and Recphi is a prediction residual of the angle. A vertical predicted value is provided by an occupied encoded point of a laser (Laser) different from a current to-be-encoded point. Within a specific range, a point that is horizontally close to but vertically far away from the current to-be-encoded point is a vertical candidate prediction point, as shown in FIG. 5. Different lasers are different rows in the chain structure. In FIG. 5, ℗ represents a to-be-encoded point, ⓒ represents an encoded point meeting a region condition, Ⓕ represents a finally selected vertical prediction point, ⊗ represents a previous encoded occupied point in a same row as the to-be-encoded point, and ⊕ represents a position previous to a previous position of the previous encoded occupied point in the same row as the to-be-encoded point.

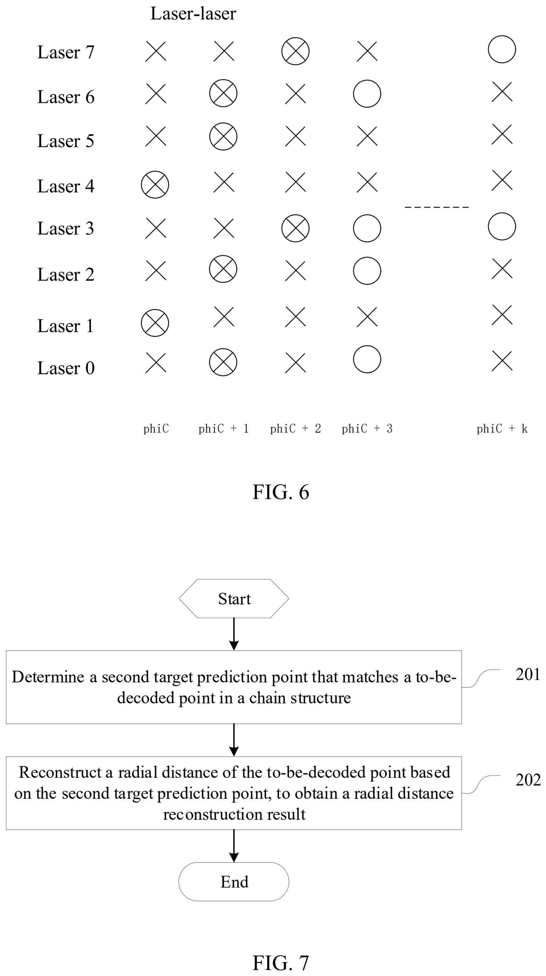

It should be noted that, as shown in FIG. 6, ⊗ represents a first to-be-encoded point of each laser, ○ represents another occupied point, × represents an unoccupied point, and phiC, phiC+1, ..., phiC+k represent different angles. In the related art, a radial distance prediction method in a TML does not take prediction of a first point of each laser into account, resulting in a large prediction residual for a radial distance of the first point. In addition, all predicted values in the horizontal prediction list are radial distances of encoded points in the same row as the current to-be-encoded point, and there is no clear difference between the predicted values. Because advantages brought by the rate-distortion optimization method are not fully used, there is great impact on updating of a context model and distribution of prediction residuals of radial distances in an entropy encoding process, leading to a larger bitstream and impact on coding efficiency.

An embodiment of this application provides a method for predictively encoding/decoding a radial distance of a point cloud. For an occupied point in a chain structure, a matched prediction point is searched out from other encoded rows. A search rule may be searching for a point with a shortest horizontal distance and a shortest vertical distance to a current to-be-encoded point. Using a radial distance of the point as a predicted value of the current to-be-encoded point, then adding the predicted value to a prediction list, selecting an optimal predicted value from the prediction list according to the rate-distortion optimization method, then obtaining a prediction residual through calculation, and writing the prediction residual and a prediction index into a bitstream. A decoder parses the prediction index and the prediction residual, finds a predicted value for each to-be-decoded point in the same way, adds the found predicted value to a corresponding position in the prediction list, and finally reconstructs an original radial distance value based on the predicted value and prediction residual.

In this embodiment of this application, radial distances of points in the chain structure are predicted, and information of each reconstructed point is fully used. Therefore, radial distance prediction performance can be significantly improved, the bitstream required for radial distance encoding can be reduced, and efficiency of radial distance geometric encoding can be improved.

In an implementation, a point cloud encoding method for an encoder may include the following process:

For each occupied point in a chain structure, starting from a current to-be-encoded point, a search for a matched prediction point from occupied points in other encoded rows is performed according to a bottom-up search rule. It should be noted that the search rule is not fixed. Top-down or other search rules within an available range may also be used. The search rule may be searching for a point with a shortest horizontal distance and a shortest vertical distance to the current to-be-encoded point. Using a radial distance of the found point as a predicted value of the current to-be-encoded point.

It should be noted that the horizontal distance and the vertical distance in the search rule may be used separately as search metrics, or the two distances may be quantized or weighted to obtain a new distance value as a search metric. For example, similar to the rate-distortion optimization method, an optimal predicted value may be selected from encoded occupied points based on the horizontal distance and the vertical distance. For example, the horizontal distance may be defined as a column-wise difference $d_{first}$ between the current to-be-encoded point and an encoded occupied point, and the vertical distance may be defined as a row-wise difference $d_{second}$ between the current to-be-encoded point and the encoded occupied point. Then a weighted distance metric may be obtained:

$$d_{final} = \lambda \times d_{first} + d_{second}.$$

An encoded occupied point corresponding to an optimal value of $d_{final}$ is selected as a prediction point, and a radial distance of the prediction point is used as the predicted value of the current to-be-encoded point. For example, a radial distance of an encoded occupied point with smallest $d_{final}$ may be used as the predicted value of the current to-be-encoded point.

Then the radial distance of the prediction point is added to the $k^{th}$ position in a horizontal prediction list. It should be noted that the prediction point may also be added to other positions in the horizontal prediction list, or the radial distance of the prediction point may be used as the predicted value of the current to-be-encoded point alone without adding the prediction point to the prediction list.

Finally, the optimal predicted value is selected from the prediction list according to the rate-distortion optimization method, a prediction residual is obtained through calculation, and the prediction residual and a prediction index are written into a bitstream.

In this embodiment of this application, coordinate transformation processing is performed on the geometric information of the point cloud to obtain the geometric information having the chain structure; the first target prediction point that matches the to-be-encoded point in the chain structure is determined, where the first target prediction point is the point selected from the first target occupied points in the chain structure, the first target occupied points include the occupied points in the encoded row, and the first target occupied points and the to-be-encoded point are located in different rows in the chain structure; and the radial distance of the to-be-encoded point is predictively encoded based on the first target prediction point, to obtain the radial distance encoding result. In this way, predictive encoding based on the first target prediction point can fully use information of the occupied points in the encoded row, thereby improving radial distance prediction performance, reducing a radial distance bitstream, and improving encoding efficiency.

Optionally, in a case that the to-be-encoded point is an occupied point that is first occupied in a row in which the to-be-encoded point is located, the first target occupied points include the occupied point that is first occupied in the encoded row.

In the case that the to-be-encoded point is the occupied point that is first occupied in the row in which the to-be-encoded point is located, the first target occupied points may be first encoded occupied points located in different rows from the to-be-encoded point in the chain structure. The first target prediction point may be a point selected from the occupied points that are first occupied in other encoded rows.

In this implementation, in the case that the to-be-encoded point is the point that is first occupied in the row in which the to-be-encoded point is located, the first target occupied points include the occupied point that is first occupied in the encoded row. This can reduce a radial distance prediction residual of the occupied point that is first occupied in each row in the chain structure, reduce the radial distance bitstream, and improve encoding efficiency.

Optionally, the determining a first target prediction point that matches a to-be-encoded point in the chain structure includes:

determining, based on at least one of a horizontal distance and a vertical distance, the first target prediction point that matches the to-be-encoded point, where
the horizontal distance is a horizontal distance between the first target occupied point and the to-be-encoded point in the chain structure; and
the vertical distance is a vertical distance between the first target occupied point and the to-be-encoded point in the chain structure.

The first target prediction point that matches the to-be-encoded point may be determined based on the horizontal distance; or the first target prediction point that matches the to-be-encoded point may be determined based on the vertical distance; or the first target prediction point that matches the to-be-encoded point may be determined based on the horizontal distance and the vertical distance.

In an implementation, a selection rule for selecting the first target prediction point from the first target occupied points in the chain structure may be: searching for a point with a shortest horizontal distance to the to-be-encoded point from the first target occupied points in the chain structure, and using the found point as the first target prediction point.

In an implementation, a selection rule for selecting the first target prediction point from the first target occupied points in the chain structure may be: searching for a point with a shortest vertical distance to the to-be-encoded point from the first target occupied points in the chain structure, and using the found point as the first target prediction point.

In an implementation, a selection rule for selecting the first target prediction point from the first target occupied points in the chain structure may be: searching for a point with a shortest horizontal distance and a shortest vertical distance to the to-be-encoded point from the first target occupied points in the chain structure, and using the found point as the first target prediction point.

In an implementation, the horizontal distance may be defined as a column-wise difference $d_{first}$ between the to-be-encoded point and the first target occupied point, the vertical distance may be defined as a row-wise difference $d_{second}$ between the to-be-encoded point and the first target occupied point, and a weighted distance metric may be obtained:

$$d_{final} = \lambda \times d_{first} + d_{second},$$

where $\lambda$ is a preset weighting value, and an encoded occupied point corresponding to an optimal value of $d_{final}$ among the first target occupied points is used as the first target prediction point. For example, an encoded occupied point with smallest $d_{final}$ among the first target occupied points may be used as the first target prediction point.

In an implementation, the horizontal distance may be defined as a column-wise difference $d_{first}$ between the to-be-encoded point and the first target occupied point, the vertical distance may be defined as a row-wise difference $d_{second}$ between the to-be-encoded point and the first target occupied point, and a weighted distance metric may be obtained:

$$d_{final} = a1 * d_{first} + a2 * d_{second},$$

where a1 and a2 are both preset weighting values, and an encoded occupied point corresponding to an optimal value of $d_{final}$ among the first target occupied points is used as the first target prediction point. For example, an encoded occupied point with smallest $d_{final}$ among the first target occupied points may be used as the first target prediction point.

In this implementation, the first target prediction point that matches the to-be-encoded point is determined based on at least one of the horizontal distance and the vertical distance, so that the information of each reconstructed point in the chain structure can be fully used. In this way, radial distance prediction performance can be improved, the radial distance bitstream can be reduced, and encoding efficiency can be improved.

Optionally, the first target prediction point is an occupied point with a shortest horizontal distance and a shortest vertical distance to the to-be-encoded point, in the encoded row in the chain structure.

In this implementation, the first target prediction point is the occupied point with the shortest horizontal distance and the shortest vertical distance to the to-be-encoded point, in the encoded row in the chain structure. Therefore, radial distance prediction performance can be significantly improved, the bitstream required for radial distance encoding can be reduced, and efficiency of radial distance geometric encoding can be improved.

Optionally, the predictively encoding a radial distance of the to-be-encoded point based on the first target prediction point includes:

updating, based on a radial distance of the first target prediction point, a prediction list corresponding to the radial distance of the to-be-encoded point; and
selecting an optimal predicted value from an updated prediction list, and obtaining a prediction residual and prediction information based on the optimal predicted value, where
the radial distance encoding result includes the prediction residual and the prediction information.

The prediction information may include a prediction index, or other information that may be used to represent a position of the optimal predicted value in the prediction list. The optimal predicted value may be selected from the updated prediction list by using the rate-distortion optimization method, or the optimal predicted value may be selected from the updated prediction list by using other optimization methods with the same function as a rate-distortion optimization method. This is not limited in this embodiment.

In addition, the updating, based on a radial distance of the first target prediction point, a prediction list corresponding to the radial distance of the to-be-encoded point may include: adding the radial distance of the first target prediction point to the prediction list corresponding to the radial distance of the to-be-encoded point. For example, the radial distance of the first target prediction point may be added to a first position in the prediction list, or to a second position in the prediction list, or to a third position in the prediction list, or to any position in the prediction list. This is not limited in this embodiment. Adding the radial distance of the first target prediction point to the prediction list corresponding to the radial distance of the to-be-encoded point may be: adding the radial distance of the first target prediction point to a horizontal prediction list corresponding to the radial distance of the to-be-encoded point.

It should be noted that the updating, based on a radial distance of the first target prediction point, a prediction list corresponding to the radial distance of the to-be-encoded point may include: adding the radial distance of the first target prediction point to the prediction list corresponding to the radial distance of the to-be-encoded point, and removing a value in the prediction list from the prediction list. The removed value may be a first value in the prediction list or a last value in the prediction list. This is not limited in this embodiment.

In an implementation, the prediction list may be a horizontal prediction list, and it may be determined whether a prediction residual (resR) of the first target prediction point is greater than a preset threshold (or whether the first target prediction point uses a vertical predicted value for prediction). If the prediction residual is greater than the threshold (or the vertical predicted value is selected for prediction), a last value in the horizontal prediction list is removed, and the radial distance of the first target prediction point is added to the horizontal prediction list. Otherwise, an optimal predicted value of the first target prediction point in predictive encoding is removed from the horizontal prediction list, and the radial distance of the first target prediction point is added to the horizontal prediction list.

In this implementation, the prediction list corresponding to the radial distance of the to-be-encoded point is updated based on the radial distance of the first target prediction point; and the optimal predicted value is selected from the updated prediction list, and the prediction residual and the prediction information are obtained based on the optimal predicted value, where the radial distance encoding result includes the prediction residual and the prediction information. In this way, predictive encoding based on the radial distance of the first target prediction point can fully use the information of the occupied points in the encoded row, thereby improving radial distance prediction performance, reducing the radial distance bitstream, and improving encoding efficiency.

FIG. 7 is a flowchart of a point cloud decoding method according to an embodiment of this application. The point cloud decoding method may be applied to a decoding device. As shown in FIG. 7, the point cloud decoding method includes the following steps.

Step 201: Determine a second target prediction point that matches a to-be-decoded point in a chain structure, where the second target prediction point is a point selected from second target occupied points in the chain structure, the second target occupied points include occupied points in a decoded row, and the second target occupied points and the to-be-decoded point are located in different rows in the chain structure.

Step 202: Reconstruct a radial distance of the to-be-decoded point based on the second target prediction point, to obtain a radial distance reconstruction result.

A second target occupied point may be a decoded occupied point located in a different row from the to-be-decoded point in the chain structure. The second target prediction point may be a point selected from occupied points in other decoded rows. The other rows represent rows different from a row in which the to-be-decoded point is located. An occupied point indicates that the point is not empty and contains point cloud data. An unoccupied point indicates that the point is empty and does not contain point cloud data.

In an implementation, a selection rule for selecting the second target prediction point from the second target occupied points in the chain structure may be: selecting the second target prediction point from the second target occupied points in the chain structure based on at least one of a horizontal distance and a vertical distance, where the horizontal distance is a horizontal distance between the second target occupied point and the to-be-decoded point in the chain structure; and the vertical distance is a vertical distance between the second target occupied point and the to-be-decoded point in the chain structure.

It should be noted that for the second target occupied points in the chain structure, the second target prediction point matching the to-be-decoded point may be determined from the second target occupied points according to a bottom-up search rule, a top-down search rule, or another search rule, starting from the current the to-be-decoded point.

In addition, the reconstructing a radial distance of the to-be-decoded point based on the second target prediction point, to obtain a radial distance reconstruction result may include: parsing a prediction residual and prediction information of the radial distance of the to-be-decoded point; obtaining a predicted value of the radial distance of the to-be-decoded point based on the prediction information and a radial distance of the second target prediction point; and reconstructing the radial distance of the to-be-decoded point based on the predicted value of the radial distance of the to-be-decoded point and the prediction residual, to obtain the radial distance reconstruction result; or a prediction index may be a preset value or a value specified in a protocol, and the reconstructing a radial distance of the to-be-decoded point based on the second target prediction point, to obtain a radial distance reconstruction result may include: parsing a prediction residual of the radial distance of the to-be-decoded point; obtaining a predicted value of the radial distance of the to-be-decoded point based on a radial distance of the second target prediction point; and reconstructing the radial distance of the to-be-decoded point based on the predicted value of the radial distance of the to-be-decoded point and the prediction residual, to obtain the radial distance reconstruction result; or the reconstructing a radial distance of the to-be-decoded point based on the second target prediction point, to obtain a radial distance reconstruction result may include: parsing a prediction residual of the radial distance of the to-be-decoded point; and using a radial distance of the second target prediction point as a predicted value of the radial distance of the to-be-decoded point, and reconstructing the radial distance of the to-be-decoded point based on the predicted value of the radial distance of the to-be-decoded point and the prediction residual, to obtain the radial distance reconstruction result; or the like. A specific implementation of reconstructing the radial distance of the to-be-decoded point based on the second target prediction point is not limited in this embodiment.

In an implementation, a point cloud decoding method for a decoder may include the following process: A prediction index and a prediction residual are parsed first. It should be noted that the prediction index may be obtained without parsing. For example, the prediction index may be set to a default value.

Then starting from a current to-be-decoded point, a search for a matched prediction point from occupied points in other decoded rows is performed according to a bottom-up search rule. It should be noted that the search rule is not fixed. Top-down or other search rules within an available range may also be used. The search rule is searching for a point with a shortest horizontal distance and a shortest vertical distance to the current to-be-decoded point.Using a radial distance of the found point as a predicted value of the current to-be-decoded point.

It should be noted that the horizontal distance and the vertical distance in the search rule may be used separately as search metrics, or the two distances may be quantized or weighted to obtain a new distance value as a search metric. For example, similar to a rate-distortion optimization method, an optimal predicted value may be selected from decoded occupied points based on the horizontal distance and the vertical distance. For example, the horizontal distance may be defined as a column-wise difference $d_{first}$ between the current to-be-decoded point and a decoded occupied point, and the vertical distance may be defined as a row-wise difference $d_{second}$ between the current to-be-decoded point and the decoded occupied point. Then a weighted distance metric may be obtained:

$$d_{final} = \lambda \times d_{first} + d_{second}.$$

A decoded occupied point corresponding to an optimal value of $d_{final}$ is selected as a prediction point, and a radial distance of the prediction point is used as the predicted value of the current to-be-decoded point. For example, a radial distance of a decoded occupied point with smallest $d_{final}$ may be used as the predicted value of the current to-be-decoded point.

If the prediction index is parsed, the found predicted value is added to a corresponding position in a prediction list; otherwise, the predicted value does not need to be added to the prediction list, but is used as the predicted value of the current to-be-decoded point alone.

Finally, an original radial distance value of the current to-be-decoded point is reconstructed based on the predicted value and the prediction residual.

In this embodiment of this application, the second target prediction point that matches the to-be-decoded point in the chain structure is determined, where the second target prediction point is the point selected from the second target occupied points in the chain structure, the second target occupied points include the occupied points in the decoded row, and the second target occupied points and the to-be-decoded point are located in different rows in the chain structure; and the radial distance of the to-be-decoded point is reconstructed based on the second target prediction point, to obtain the radial distance reconstruction result. In this way, predictive decoding based on the second target prediction point can fully use information of the occupied points in the decoded row, thereby improving radial distance prediction performance, reducing a radial distance bitstream, and improving encoding/decoding efficiency.

Optionally, in a case that the to-be-decoded point is an occupied point that is first occupied in a row in which the to-be-decoded point is located, the second target occupied points include the occupied point that is first occupied in the decoded row.

In the case that the to-be-decoded point is the occupied point that is first occupied in the row in which the to-be-decoded point is located, the second target occupied points may be first decoded occupied points located in different rows from the to-be-decoded point in the chain structure. The second target prediction point may be a point selected from the occupied points that are first occupied in the other decoded rows.

In this implementation, in the case that the to-be-decoded point is the occupied point that is first occupied in the row in which the to-be-decoded point is located, the second target occupied points include the occupied point that is first occupied in the decoded row. This can reduce a radial distance prediction residual of the occupied point that is first occupied in each row in the chain structure, reduce the radial distance bitstream, and improve encoding/decoding efficiency.

Optionally, the determining a second target prediction point that matches a to-be-decoded point in a chain structure includes:

determining, based on at least one of a horizontal distance and a vertical distance, the second target prediction point that matches the to-be-decoded point, where
the horizontal distance is a horizontal distance between the second target occupied point and the to-be-decoded point in the chain structure; and
the vertical distance is a vertical distance between the second target occupied point and the to-be-decoded point in the chain structure.

The second target prediction point that matches the to-be-decoded point may be determined based on the horizontal distance; or the second target prediction point that matches the to-be-decoded point may be determined based on the vertical distance; or the second target prediction point that matches the to-be-decoded point may be determined based on the horizontal distance and the vertical distance.

In an implementation, a selection rule for selecting the second target prediction point from the second target occupied points in the chain structure may be: searching for a point with a shortest horizontal distance to the to-be-decoded point from the second target occupied points in the chain structure, and using the found point as the second target prediction point.

In an implementation, a selection rule for selecting the second target prediction point from the second target occupied points in the chain structure may be: searching for a point with a shortest vertical distance to the to-be-decoded point from the second target occupied points in the chain structure, and using the found point as the second target prediction point.

In an implementation, a selection rule for selecting the second target prediction point from the second target occupied points in the chain structure may be: searching for a point with a shortest horizontal distance and a shortest vertical distance to the to-be-decoded point from the second target occupied points in the chain structure, and using the found point as the second target prediction point.

In an implementation, the horizontal distance may be defined as a column-wise difference $d_{first}$ between the to-be-decoded point and the second target occupied point, the vertical distance may be defined as a row-wise difference $d_{second}$ between the to-be-decoded point and the second target occupied point, and a weighted distance metric may be obtained:

$$d_{final} = \lambda \times d_{first} + d_{second},$$

where $\lambda$ is a preset weighting value, and a decoded occupied point corresponding to an optimal value of $d_{final}$ among the second target occupied points is used as the second target prediction point. For example, a decoded occupied point with smallest $d_{final}$ among the second target occupied points may be used as the second target prediction point.

In an implementation, the horizontal distance may be defined as a column-wise difference $d_{first}$ between the to-be-decoded point and the second target occupied point, the vertical distance may be defined as a row-wise difference $d_{second}$ between the to-be-decoded point and the second target occupied point, and a weighted distance metric may be obtained:

$$d_{final} = a1 * d_{first} + a2 * d_{second},$$

where a1 and a2 are both preset weighting values, and a decoded occupied point corresponding to an optimal value of $d_{final}$ among the second target occupied points is used as the second target prediction point. For example, a decoded occupied point with smallest $d_{final}$ among the second target occupied points may be used as the second target prediction point.

In this implementation, the second target prediction point that matches the to-be-decoded point is determined based on at least one of the horizontal distance and the vertical distance, so that the information of each reconstructed point in the chain structure can be fully used. In this way, radial distance prediction performance can be improved, the radial distance bitstream can be reduced, and encoding/decoding efficiency can be improved.

Optionally, the second target prediction point is an occupied point with a shortest horizontal distance and a shortest vertical distance to the to-be-decoded point, in the decoded row in the chain structure.

In this implementation, the second target prediction point is the occupied point with the shortest horizontal distance and the shortest vertical distance to the to-be-decoded point, in the decoded row in the chain structure. Therefore, radial distance prediction performance can be significantly improved, the bitstream required for radial distance decoding can be reduced, and efficiency of radial distance geometric encoding/decoding can be improved.

Optionally, the reconstructing a radial distance of the to-be-decoded point based on the second target prediction point, to obtain a radial distance reconstruction result includes:

> parsing a prediction residual and prediction information of the radial distance of the to-be-decoded point;
> obtaining a predicted value of the radial distance of the to-be-decoded point based on the prediction information and a radial distance of the second target prediction point; and
> reconstructing the radial distance of the to-be-decoded point based on the predicted value of the radial distance of the to-be-decoded point and the prediction residual, to obtain the radial distance reconstruction result.

The prediction information may include a prediction index, or other information that may be used to represent a position of the optimal predicted value in the prediction list. The prediction residual may be a prediction residual in a radial distance encoding result, and the prediction information may be prediction information in the radial distance encoding result.

In addition, the obtaining a predicted value of the radial distance of the to-be-decoded point based on the prediction information and a radial distance of the second target prediction point may include: adding the radial distance of the second target prediction point to a corresponding position in the prediction list, and obtaining the predicted value of the radial distance of the to-be-decoded point from the prediction list based on the prediction information, where the predicted value may be a value indicated by the prediction information in the prediction list.

In this implementation, the prediction residual and the prediction information of the radial distance of the to-be-decoded point are parsed; the predicted value of the radial distance of the to-be-decoded point is obtained based on the prediction information and the radial distance of the second target prediction point; and the radial distance of the to-be-decoded point is reconstructed based on the predicted value of the radial distance of the to-be-decoded point and the prediction residual, to obtain the radial distance reconstruction result. In this way, predictive decoding based on the radial distance of the second target prediction point can fully use the information of the occupied points in the decoded row, thereby improving radial distance prediction performance, reducing the radial distance bitstream, and improving encoding/decoding efficiency.

The point cloud encoding method and the point cloud decoding method in the embodiments of this application are hereinafter described by using two specific embodiments.

Embodiment 1

In this embodiment, a radial distance is predicted for an occupied point that is first occupied in each row.

Encoder:

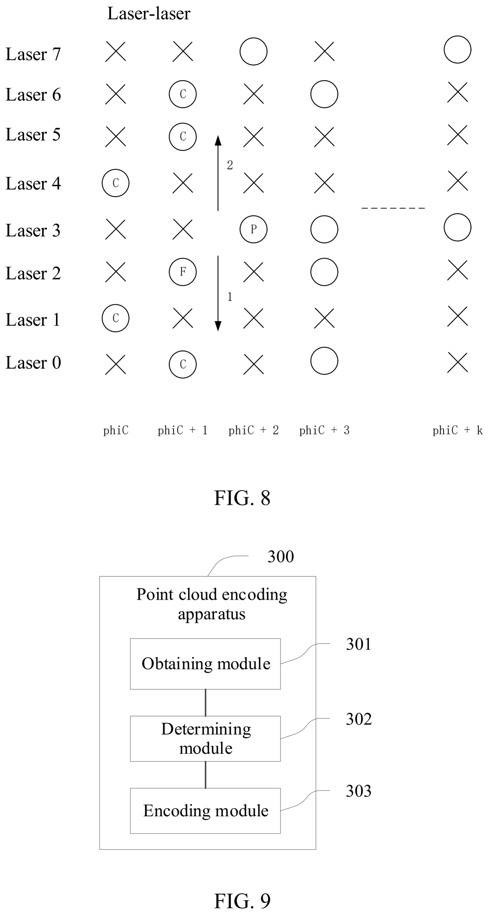

First, for an occupied point that is first occupied in each row in a chain structure, as shown in FIG. 8, a point P is a to-be-encoded point and a point C is a first encoded point in another row. Starting from the current to-be-encoded point P, a search for a matched prediction point from first points in other encoded rows is performed according to a bottom-up rule. The search rule is: searching for a point with a shortest horizontal distance and a shortest vertical distance to the current to-be-encoded point, and using a radial distance of the found point as a predicted value of the current to-be-encoded point P. F in the figure is a finally selected prediction point. In FIG. 8, ⓟ represents a to-be-encoded point, ⓒ represents an encoded point, and ⓕ represents a finally selected prediction point.

Then the radial distance of the prediction point is added to a second position in a horizontal prediction list. It should be noted that the prediction point herein may also be added to other positions in the prediction list, or the radial distance of the prediction point may be used as a predicted value of a first point alone without adding the prediction point to the prediction list.

Finally, an optimal predicted value is selected from the prediction list according to a rate-distortion optimization method, a prediction residual is obtained through calculation, and the prediction residual and a prediction index are written into a bitstream.

Decoder:

A prediction index and a prediction residual are parsed first. It should be noted that the prediction index may be obtained without parsing. For example, the prediction index may be set to a default value.

Then a matched prediction point is searched out from first reconstructed points in other decoded rows. A search rule is searching for a point with a shortest horizontal distance and a shortest vertical distance to a current to-be-decoded point. Using a radial distance of the found point as a predicted value of the current to-be-decoded point.

If the prediction index is parsed, the found predicted value is added to a corresponding position in a prediction list; otherwise, the predicted value does not need to be added to the prediction list, but is used as a predicted value of a first point alone. Finally, an original radial distance value is reconstructed based on the predicted value and the prediction residual.

Embodiment 2

In this embodiment, a radial distance is predicted for any occupied point in each row.

Encoder:

First, for occupied points in a chain structure, starting from a current to-be-encoded point, a search for a matched prediction point from occupied points in other encoded rows is performed according to a bottom-up rule. The search rule is: searching for a point with a shortest horizontal distance and a shortest vertical distance to the current to-be-encoded point, and using a radial distance of the found point as a predicted value of the current to-be-encoded point. It should be noted that the horizontal distance and the vertical distance in the search rule may be used separately as search metrics, or the two distances may be quantized or weighted to obtain a new distance value as a search metric. In an implementation, similar to a rate-distortion optimization method, an optimal predicted value may be selected from encoded occupied points based on the horizontal distance and the vertical distance. For example, the horizontal distance may be defined as a column-wise difference $d_{first}$ between the current to-be-encoded point and an encoded occupied point, and the vertical distance may be defined as a row-wise difference $d_{second}$ between the current to-be-encoded point and the encoded occupied point. Then a weighted distance metric may be obtained:

$$d_{final} = \lambda \times d_{first} + d_{second}.$$

An encoded occupied point corresponding to an optimal value of $d_{final}$ is selected as a prediction point, and a radial distance of the prediction point is used as the predicted value of the current to-be-encoded point. For example, a radial distance of an encoded occupied point with smallest $d_{final}$ may be used as the predicted value of the current to-be-encoded point.

Then the radial distance of the prediction point is added to the $k^{th}$ position in a horizontal prediction list. It should be noted that the prediction point may also be added to other positions in the horizontal prediction list, or the radial distance of the prediction point may be used as the predicted value of the current to-be-encoded point alone without adding the prediction point to the prediction list.

Finally, an optimal predicted value is selected from the prediction list according to the rate-distortion optimization method, a prediction residual is obtained through calculation, and the prediction residual and a prediction index are written into a bitstream.

Decoder:

A prediction index and a prediction residual are parsed first. It should be noted that the prediction index may be obtained without parsing. For example, the prediction index may be set to a default value.

Then a matched prediction point is searched out from reconstructed points in other decoded rows. A search rule is: searching for a point with a shortest horizontal distance and a shortest vertical distance to a current to-be-decoded point, and using a radial distance of the found point as a predicted value of the current to-be-decoded point. It should be noted that the horizontal distance and the vertical distance in the search rule may be used separately as search metrics, or the two distances may be quantized or weighted to obtain a new distance value as a search metric. In an implementation, similar to the rate-distortion optimization method, an optimal predicted value may be selected from decoded occupied points based on the horizontal distance and the vertical distance. For example, the horizontal distance may be defined as a column-wise difference $d_{first}$ between the current to-be-decoded point and a decoded occupied point, and the vertical distance may be defined as a row-wise difference $d_{second}$ between the current to-be-decoded point and the decoded occupied point. Then a weighted distance metric may be obtained:

$$d_{final} = \lambda \times d_{first} + d_{second}.$$

A decoded occupied point corresponding to an optimal value of $d_{final}$ is selected as a prediction point, and a radial distance of the prediction point is used as the predicted value of the current to-be-decoded point. For example, a radial distance of a decoded occupied point with smallest $d_{final}$ may be used as the predicted value of the current to-be-decoded point.

If the prediction index is parsed, the found predicted value is added to a corresponding position in a prediction list; otherwise, the predicted value does not need to be added to the prediction list, but is used as the predicted value of the current to-be-decoded point alone. Finally, an original radial distance value of the current to-be-decoded point is reconstructed based on the predicted value and the prediction residual.

An embodiment of this application provides a method for predictively encoding/decoding a radial distance of a point cloud. For an occupied point in a chain structure, a matched prediction point is searched out from other encoded rows. A search rule is searching for a point with a shortest horizontal distance and a shortest vertical distance to a current to-be-encoded point. Using a radial distance of the point as a predicted value of the current point, then adding the predicted value to a prediction list, finally selecting an optimal predicted value from the prediction list according to a rate-distortion optimization method, then obtaining a prediction residual through calculation, and writing the prediction residual and a prediction index into a bitstream. A decoder parses the prediction index and the prediction residual, finds a predicted value for each to-be-decoded point in the same way, adds the found predicted value to a corresponding position in the prediction list, and finally reconstructs an original radial distance value based on the predicted value and prediction residual. In this way, radial distances of points in the chain structure are predictively decoded, and information of each reconstructed point is fully used. Therefore, radial distance prediction performance can be significantly improved, the bitstream required for radial distance encoding can be reduced, and efficiency of radial distance geometric encoding can be improved.

It should be noted that the point cloud encoding method provided in the embodiments of this application may be performed by a point cloud encoding apparatus or a control module for performing the point cloud encoding method in the point cloud encoding apparatus. A point cloud encoding apparatus provided in the embodiments of this application is described by assuming that the point cloud encoding apparatus performs the point cloud encoding method in the embodiments of this applications.

FIG. 9 is a structural diagram of a point cloud encoding apparatus according to an embodiment of this application. As shown in FIG. 9, the point cloud encoding apparatus 300 includes:

an obtaining module 301, configured to perform coordinate transformation processing on geometric information of a point cloud to obtain geometric information having a chain structure;

a determining module 302, configured to determine a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure; and

an encoding module 303, configured to predictively encode a radial distance of the to-be-encoded point based on the first target prediction point, to obtain a radial distance encoding result.

Optionally, in a case that the to-be-encoded point is an occupied point that is first occupied in a row in which the to-be-encoded point is located, the first target occupied points include the occupied point that is first occupied in the encoded row.

Optionally, the determining module is specifically configured to:

determine, based on at least one of a horizontal distance and a vertical distance, the first target prediction point that matches the to-be-encoded point, where

the horizontal distance is a horizontal distance between the first target occupied point and the to-be-encoded point in the chain structure; and

the vertical distance is a vertical distance between the first target occupied point and the to-be-encoded point in the chain structure.

Optionally, the first target prediction point is an occupied point with a shortest horizontal distance and a shortest vertical distance to the to-be-encoded point, in the encoded row in the chain structure.

Optionally, the encoding module is specifically configured to:

update, based on a radial distance of the first target prediction point, a prediction list corresponding to the radial distance of the to-be-encoded point; and

select an optimal predicted value from an updated prediction list, and obtain a prediction residual and prediction information based on the optimal predicted value, where

the radial distance encoding result includes the prediction residual and the prediction information.

The point cloud encoding apparatus 300 in this embodiment of this application can improve encoding efficiency.

The point cloud encoding apparatus in this embodiment of this application may be an apparatus, an apparatus with an operating system or an electronic device, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The point cloud encoding apparatus provided in this embodiment of this application can implement each process implemented in the method embodiment in FIG. 3, with the same technical effect achieved. To avoid repetition, details are not described herein again.

It should be noted that the point cloud decoding method provided in the embodiments of this application may be performed by a point cloud decoding apparatus or a control module for performing the point cloud decoding method in the point cloud decoding apparatus. A point cloud decoding apparatus provided in the embodiments of this application is described by assuming that the point cloud decoding apparatus performs the point cloud decoding method in the embodiments of this application.

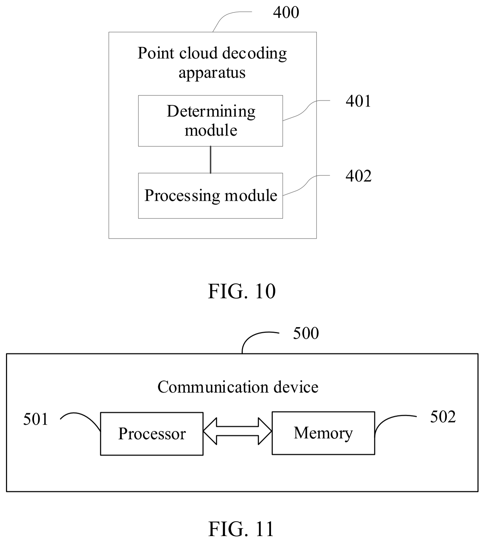

FIG. 10 is a structural diagram of a point cloud decoding apparatus according to an embodiment of this application. As shown in FIG. 10, the point cloud decoding apparatus 400 includes:

a determining module 401, configured to determine a second target prediction point that matches a to-be-decoded point in a chain structure, where the second target prediction point is a point selected from second target occupied points in the chain structure, the second target occupied points include occupied points in a decoded row, and the second target occupied points and the to-be-decoded point are located in different rows in the chain structure; and

a processing module 402, configured to reconstruct a radial distance of the to-be-decoded point based on the second target prediction point, to obtain a radial distance reconstruction result.

Optionally, in a case that the to-be-decoded point is an occupied point that is first occupied in a row in which the to-be-decoded point is located, the second target occupied points include the occupied point that is first occupied in the decoded row.

Optionally, the determining module is specifically configured to:

determine, based on at least one of a horizontal distance and a vertical distance, the second target prediction point that matches the to-be-decoded point, where

the horizontal distance is a horizontal distance between the second target occupied point and the to-be-decoded point in the chain structure; and

the vertical distance is a vertical distance between the second target occupied point and the to-be-decoded point in the chain structure.

Optionally, the second target prediction point is an occupied point with a shortest horizontal distance and a shortest vertical distance to the to-be-decoded point, in the decoded row in the chain structure.

Optionally, the processing module is specifically configured to:

parse a prediction residual and prediction information of the radial distance of the to-be-decoded point; obtain a predicted value of the radial distance of the to-be-decoded point based on the prediction information and a radial distance of the second target prediction point; and
reconstruct the radial distance of the to-be-decoded point based on the predicted value of the radial distance of the to-be-decoded point and the prediction residual, to obtain the radial distance reconstruction result.

The point cloud decoding apparatus 400 in this embodiment of this application can improve decoding efficiency.

The point cloud decoding apparatus in this embodiment of this application may be an apparatus, an apparatus with an operating system or an electronic device, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The point cloud decoding apparatus provided in this embodiment of this application can implement each process implemented in the method embodiment in FIG. 7, with the same technical effect achieved. To avoid repetition, details are not described herein again.

Optionally, as shown in FIG. 11, an embodiment of this application further provides a communication device 500, including a processor 501 and a memory 502. The memory 502 stores a program or instructions capable of running on the processor 501. For example, when the communication device 500 is an encoding device, and the program or instructions are executed by the processor 501, the steps of the foregoing point cloud encoding method embodiment are implemented, with the same technical effect achieved. When the communication device 500 is a decoding device, and the program or instructions are executed by the processor 501, the steps of the foregoing point cloud decoding method embodiment are implemented, with the same technical effect achieved. To avoid repetition, details are not described herein again.

An embodiment of this application further provides a communication device, including a processor and a communication interface. The processor is configured to: perform coordinate transformation processing on geometric information of a point cloud to obtain geometric information having a chain structure; determine a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure; and predictively encode a radial distance of the to-be-encoded point based on the first target prediction point, to obtain a radial distance encoding result. The communication device embodiment corresponds to the foregoing point cloud encoding method embodiment, and each implementation process and implementation of the foregoing point cloud encoding method embodiment can be applied to the communication device embodiment, with the same technical effect achieved.

An embodiment of this application further provides a communication device, including a processor and a communication interface. The processor is configured to: determine a second target prediction point that matches a to-be-decoded point in a chain structure, where the second target prediction point is a point selected from second target occupied points in the chain structure, the second target occupied points include occupied points in a decoded row, and the second target occupied points and the to-be-decoded point are located in different rows in the chain structure; and reconstruct a radial distance of the to-be-decoded point based on the second target prediction point, to obtain a radial distance reconstruction result. The communication device embodiment corresponds to the foregoing point cloud decoding method embodiment, and each implementation process and implementation of the foregoing point cloud decoding method embodiment can be applied to the communication device embodiment, with the same technical effect achieved.

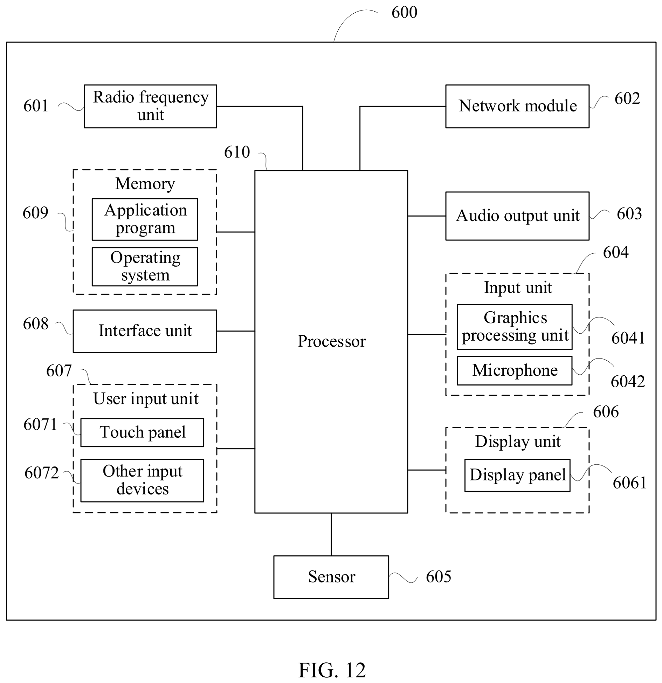

Optionally, the communication device may be a terminal. Specifically, FIG. 12 is a schematic diagram of a hardware structure of a terminal for implementing an embodiment of this application.

The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to all components. The power supply may be logically connected to the processor 610 through a power management system. In this way, functions such as charge management, discharge management, and power consumption management are implemented by using the power management system. The terminal structure shown in FIG. 12 does not constitute a limitation on the terminal. The terminal may include more or fewer components than those shown in the figure, or some components are combined, or component arrangements are different. Details are not described herein again.

It should be understood that, in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 601 may transmit the downlink data to the processor 610 for processing. In addition, the radio frequency unit 601 may send uplink data to the network-side device. Usually, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may primarily include a first storage area for storing programs or instructions and a second storage area for storing data. The first storage area may store an operating system, an application program or instructions required by at least one function (such as an audio play function and an image play function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 610.

In a case that the terminal is an encoding device,
the processor 610 is configured to:

perform coordinate transformation processing on geometric information of a point cloud to obtain geometric information having a chain structure;
determine a first target prediction point that matches a to-be-encoded point in the chain structure, where the first target prediction point is a point selected from first target occupied points in the chain structure, the first target occupied points include occupied points in an encoded row, and the first target occupied points and the to-be-encoded point are located in different rows in the chain structure; and
predictively encode a radial distance of the to-be-encoded point based on the first target prediction point, to obtain a radial distance encoding result.

Optionally, in a case that the to-be-encoded point is an occupied point that is first occupied in a row in which the to-be-encoded point is located, the first target occupied points include the occupied point that is first occupied in the encoded row.

Optionally, the processor 610 is specifically configured to:

determine, based on at least one of a horizontal distance and a vertical distance, the first target prediction point that matches the to-be-encoded point, where
the horizontal distance is a horizontal distance between the first target occupied point and the to-be-encoded point in the chain structure; and
the vertical distance is a vertical distance between the first target occupied point and the to-be-encoded point in the chain structure.

Optionally, the first target prediction point is an occupied point with a shortest horizontal distance and a shortest vertical distance to the to-be-encoded point, in the encoded row in the chain structure.

Optionally, the processor 610 is specifically configured to:

update, based on a radial distance of the first target prediction point, a prediction list corresponding to the radial distance of the to-be-encoded point; and select an optimal predicted value from an updated prediction list, and obtain a prediction residual and prediction information based on the optimal predicted value, where the radial distance encoding result includes the prediction residual and the prediction information.

In a case that the terminal is a decoding device, the processor 610 is configured to:

determine a second target prediction point that matches a to-be-decoded point in a chain structure, where the second target prediction point is a point selected from second target occupied points in the chain structure, the second target occupied points include occupied points in a decoded row, and the second target occupied points and the to-be-decoded point are located in different rows in the chain structure; and reconstruct a radial distance of the to-be-decoded point based on the second target prediction point, to obtain a radial distance reconstruction result.

Optionally, in a case that the to-be-decoded point is an occupied point that is first occupied in a row in which the to-be-decoded point is located, the second target occupied points include the occupied point that is first occupied in the decoded row.

Optionally, the processor 610 is specifically configured to:

determine, based on at least one of a horizontal distance and a vertical distance, the second target prediction point that matches the to-be-decoded point, where the horizontal distance is a horizontal distance between the second target occupied point and the to-be-decoded point in the chain structure; and the vertical distance is a vertical distance between the second target occupied point and the to-be-decoded point in the chain structure.

Optionally, the second target prediction point is an occupied point with a shortest horizontal distance and a shortest vertical distance to the to-be-decoded point, in the decoded row in the chain structure.

Optionally, the processor 610 is specifically configured to:

parse a prediction residual and prediction information of the radial distance of the to-be-decoded point; obtain a predicted value of the radial distance of the to-be-decoded point based on the prediction information and a radial distance of the second target prediction point; and reconstruct the radial distance of the to-be-decoded point based on the predicted value of the radial distance of the to-be-decoded point and the prediction residual, to obtain the radial distance reconstruction result.

The terminal in this embodiment of this application can improve encoding/decoding efficiency.

Specifically, the terminal in this embodiment of this application further includes a program or instructions stored in the memory 609 and capable of running on the processor 610. When the processor 610 invokes the program or instructions in the memory 609, the method performed by each module shown in FIG. 9 or FIG. 10 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing point cloud encoding method embodiment is implemented, or each process of the foregoing point cloud decoding method embodiment is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing point cloud encoding method embodiment or implement each process of the foregoing point cloud decoding method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. A point cloud encoding method, comprising:

     performing coordinate transformation processing on geometric information of a point cloud to obtain geometric information having a chain structure;
     determining a first target prediction point that matches a to-be-encoded point in the chain structure, wherein the first target prediction point is a point selected from first target occupied points in the chain structure, the first target occupied points comprise occupied points in an encoded row, and the first target occupied points and the to-be-encoded point are located in different rows in the chain structure; and
     predictively encoding a radial distance of the to-be-encoded point based on the first target prediction point, to obtain a radial distance encoding result.

2. The method according to claim 1, wherein in a case that the to-be-encoded point is an occupied point that is first occupied in a row in which the to-be-encoded point is located, the first target occupied points comprise the occupied point that is first occupied in the encoded row.

3. The method according to claim 1 or 2, wherein the determining a first target prediction point that matches a to-be-encoded point in the chain structure comprises:

     determining, based on at least one of a horizontal distance and a vertical distance, the first target prediction point that matches the to-be-encoded point, wherein
     the horizontal distance is a horizontal distance between the first target occupied point and the to-be-encoded point in the chain structure; and
     the vertical distance is a vertical distance between the first target occupied point and the to-be-encoded point in the chain structure.

4. The method according to any one of claims 1 to 3, wherein the first target prediction point is an occupied point with a shortest horizontal distance and a shortest vertical distance to the to-be-encoded point, in the encoded row in the chain structure.

5. The method according to any one of claims 1 to 4, wherein the predictively encoding a radial distance of the to-be-encoded point based on the first target prediction point comprises:

     updating, based on a radial distance of the first target prediction point, a prediction list corresponding to the radial distance of the to-be-encoded point; and
     selecting an optimal predicted value from an updated prediction list, and obtaining a prediction residual and prediction information based on the optimal predicted value, wherein
     the radial distance encoding result comprises the prediction residual and the prediction information.

6. A point cloud decoding method, comprising:

determining a second target prediction point that matches a to-be-decoded point in a chain structure, wherein the second target prediction point is a point selected from second target occupied points in the chain structure, the second target occupied points comprise occupied points in a decoded row, and the second target occupied points and the to-be-decoded point are located in different rows in the chain structure; and reconstructing a radial distance of the to-be-decoded point based on the second target prediction point, to obtain a radial distance reconstruction result.

7. The method according to claim 6, wherein in a case that the to-be-decoded point is an occupied point that is first occupied in a row in which the to-be-decoded point is located, the second target occupied points comprise the occupied point that is first occupied in the decoded row.

8. The method according to claim 6 or 7, wherein the determining a second target prediction point that matches a to-be-decoded point in a chain structure comprises:

determining, based on at least one of a horizontal distance and a vertical distance, the second target prediction point that matches the to-be-decoded point, wherein
the horizontal distance is a horizontal distance between the second target occupied point and the to-be-decoded point in the chain structure; and
the vertical distance is a vertical distance between the second target occupied point and the to-be-decoded point in the chain structure.

9. The method according to any one of claims 6 to 8, wherein the second target prediction point is an occupied point with a shortest horizontal distance and a shortest vertical distance to the to-be-decoded point, in the decoded row in the chain structure.

10. The method according to any one of claims 6 to 9, wherein the reconstructing a radial distance of the to-be-decoded point based on the second target prediction point, to obtain a radial distance reconstruction result comprises:

parsing a prediction residual and prediction information of the radial distance of the to-be-decoded point;
obtaining a predicted value of the radial distance of the to-be-decoded point based on the prediction information and a radial distance of the second target prediction point; and
reconstructing the radial distance of the to-be-decoded point based on the predicted value of the radial distance of the to-be-decoded point and the prediction residual, to obtain the radial distance reconstruction result.

11. A point cloud encoding apparatus, comprising:

an obtaining module, configured to perform coordinate transformation processing on geometric information of a point cloud to obtain geometric information having a chain structure;
a determining module, configured to determine a first target prediction point that matches a to-be-encoded point in the chain structure, wherein the first target prediction point is a point selected from first target occupied points in the chain structure, the first target occupied points comprise occupied points in an encoded row, and the first target occupied points and the to-be-encoded point are located in different rows in the chain structure; and
an encoding module, configured to predictively encode a radial distance of the to-be-encoded point based on the first target prediction point, to obtain a radial distance encoding result.

12. A point cloud decoding apparatus, comprising:

a determining module, configured to determine a second target prediction point that matches a to-be-decoded point in a chain structure, wherein the second target prediction point is a point selected from second target occupied points in the chain structure, the second target occupied points comprise occupied points in a decoded row, and the second target occupied points and the to-be-decoded point are located in different rows in the chain structure; and
a processing module, configured to reconstruct a radial distance of the to-be-decoded point based on the second target prediction point, to obtain a radial distance reconstruction result.

13. A communication device, comprising a processor, a memory, and a program or instructions capable of running on the processor, wherein when the program or instructions are executed by the processor, the steps of the point cloud encoding method according to any one of claims 1 to 5 are implemented, or when the program or instructions are executed by the processor, the steps of the point cloud decoding method according to any one of claims 6 to 10 are implemented.

14. A readable storage medium, wherein the readable storage medium stores a program or instructions, and when the program or instructions are executed by a processor, the steps of the point cloud encoding method according to any one of claims 1 to 5 are implemented, or when the program or instructions are executed by the processor, the steps of the point cloud decoding method according to any one of claims 6 to 10 are implemented.

15. A chip, wherein the chip comprises a processor and a communication interface, wherein the communication interface is coupled to the processor, and the processor is configured to run a program or instructions to implement the steps of the point cloud encoding method according to any one of claims 1 to 5 or implement the steps of the point cloud decoding method according to any one of claims 6 to 10.

FIG. 1

FIG. 2a

FIG. 2b

Start

Perform coordinate transformation processing on geometric information of a point cloud to obtain geometric information having a chain structure — 101

Determine a first target prediction point that matches a to-be-encoded point in the chain structure — 102

Predictively encode a radial distance of the to-be-encoded point based on the first target prediction point, to obtain a radial distance encoding result — 103

End

FIG. 3

FIG. 4

EP 4 651 493 A1

Laser-laser

| | | | | | | | |
|---|---|---|---|---|---|---|---|
| Laser 8 | ◯ | ✕ | ✕ | ◯ | ◯ | ⓒ | ✕ |
| Laser 7 | ◯ | ✕ | ◯ | ✕ | ◯ | ✕ | ◯ |
| Laser 6 | ✕ | ◯ | ✕ | ✕ | ✕ | ⓒ | ✕ |
| Laser 5 | ◯ | ✕ | ⊕ | ✕ | ⊗ | ✕ | ⓟ |
| Laser 4 | ✕ | ◯ | ✕ | ✕ | ✕ | ✕ | ⓒ |
| Laser 3 | ◯ | ✕ | ✕ | ◯ | ◯ | ⓒ | ✕ |
| Laser 2 | ◯ | ✕ | ◯ | ✕ | ◯ | ✕ | ⓒ |
| Laser 1 | ✕ | ◯ | ✕ | ✕ | ✕ | ⓒ | ✕ |
| Laser 0 | ◯ | ✕ | ◯ | ✕ | ◯ | ⓒ | ⓕ |

FIG. 5

Laser-laser

| | phiC | phiC + 1 | phiC + 2 | phiC + 3 | phiC + k |
|---|---|---|---|---|---|
| Laser 7 | ✕ | ✕ | ⊗ | ✕ | ○ |
| Laser 6 | ✕ | ⊗ | ✕ | ○ | ✕ |
| Laser 5 | ✕ | ⊗ | ✕ | ✕ | ✕ |
| Laser 4 | ⊗ | ✕ | ✕ | ✕ | ✕ |
| Laser 3 | ✕ | ✕ | ⊗ | ○ | ○ |
| Laser 2 | ✕ | ⊗ | ✕ | ○ | ✕ |
| Laser 1 | ⊗ | ✕ | ✕ | ✕ | ✕ |
| Laser 0 | ✕ | ⊗ | ✕ | ○ | ✕ |

FIG. 6

Start

Determine a second target prediction point that matches a to-be-decoded point in a chain structure — 201

Reconstruct a radial distance of the to-be-decoded point based on the second target prediction point, to obtain a radial distance reconstruction result — 202

End

FIG. 7

Laser-laser

| | phiC | phiC + 1 | phiC + 2 | phiC + 3 | phiC + k |
|---|---|---|---|---|---|
| Laser 7 | × | × | ◯ | × | ◯ |
| Laser 6 | × | ⓒ | × | ◯ | × |
| Laser 5 | × | ⓒ | × | × | × |
| Laser 4 | ⓒ | × | × | × | × |
| Laser 3 | × | × | Ⓟ | ◯ | ◯ |
| Laser 2 | × | Ⓕ | × | ◯ | × |
| Laser 1 | ⓒ | × | × | × | × |
| Laser 0 | × | ⓒ | × | ◯ | × |

FIG. 8

300

Point cloud encoding apparatus

Obtaining module — 301

Determining module — 302

Encoding module — 303

FIG. 9

400

Point cloud decoding apparatus

Determining module — 401

Processing module — 402

**FIG. 10**

500

Communication device

501 — Processor ⟷ Memory — 502

**FIG. 11**

FIG. 12

EP 4 651 493 A1

## INTERNATIONAL SEARCH REPORT

International application No.

**PCT/CN2024/070511**

**A.    CLASSIFICATION OF SUBJECT MATTER**

H04N 19/597(2014.01)i;  G06T 9/00(2006.01)i

According to International Patent Classification (IPC) or to both national classification and IPC

**B.    FIELDS SEARCHED**

Minimum documentation searched (classification system followed by classification symbols)

IPC: H04N, G06T

Documentation searched other than minimum documentation to the extent that such documents are included in the fields searched

Electronic data base consulted during the international search (name of data base and, where practicable, search terms used)

CNABS, CNTXT, CNKI: 点云, 编码, 解码, 压缩, 径向, 距离, 预测, 占据, 占位, 占用, 行, 列, 几何, 坐标, 变换, 转换, 链式, 重建, 方向, 水平, 垂直 VEN, DWPI, IEEE, USTXT, WOTXT, EPTXT: point, cloud, G-PCC, V-PCC, MPEG, coding, decoding, compress, distance, prediction, node, occupation, occupy, coordinate, chain, geometry, orientation, direction

**C.    DOCUMENTS CONSIDERED TO BE RELEVANT**

| Category* | Citation of document, with indication, where appropriate, of the relevant passages | Relevant to claim No. |
|---|---|---|
| A | CN 115471627 A (VIVO MOBILE COMMUNICATION CO., LTD.) 13 December 2022 (2022-12-13)<br>entire document | 1-15 |
| A | CN 114402532 A (GUANGDONG OPPO MOBILE TELECOMMUNICATIONS CORP., LTD.) 26 April 2022 (2022-04-26)<br>entire document | 1-15 |
| A | CN 115102935 A (TENCENT TECHNOLOGY (SHENZHEN) CO., LTD.) 23 September 2022 (2022-09-23)<br>entire document | 1-15 |
| A | CN 115379191 A (TENCENT TECHNOLOGY (SHENZHEN) CO., LTD.) 22 November 2022 (2022-11-22)<br>entire document | 1-15 |
| A | US 2019156520 A1 (APPLE INC.) 23 May 2019 (2019-05-23)<br>entire document | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 April 2024** | **03 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070511**

| Patent document cited in search report | | | Publication date (day/month/year) | Patent family member(s) | | | Publication date (day/month/year) |
|---|---|---|---|---|---|---|---|
| CN | 115471627 | A | 13 December 2022 | None | | | |
| CN | 114402532 | A | 26 April 2022 | None | | | |
| CN | 115102935 | A | 23 September 2022 | None | | | |
| CN | 115379191 | A | 22 November 2022 | None | | | |
| US | 2019156520 | A1 | 23 May 2019 | US | 2020273208 | A1 | 27 August 2020 |
| | | | | US | 11361471 | B2 | 14 June 2022 |
| | | | | US | 10699444 | B2 | 30 June 2020 |

Form PCT/ISA/210 (patent family annex) (July 2022)

**REFERENCES CITED IN THE DESCRIPTION**

**Patent documents cited in the description**

- CN 202310041950